# EUROPÄISCHE PATENTANMELDUNG

(11) **EP 2 286 951 A1**
(43) Veröffentlichungstag der Anmeldung: **23.02.2011**
(21) Anmeldenummer: 10008022.5
(22) Anmeldetag: 31.07.2010
(51) Int. Cl.: B23K 10/00, B23K 37/02

(54) **Vorrichtung zum Bearbeiten von Werkstücken**

(30) Priorität: 14.08.2009 DE 102009037361
(71) Anmelder: Zweng, Christian, 99510 Apolda (DE)
(72) Erfinder: Zweng, Christian, 99510 Apolda (DE)
(74) Vertreter: Schulte & Schulte

(57) **Zusammenfassung**

Zum Bearbeiten von Werkstücken 12, insbesondere zum Plasmaschneiden dient eine Einrichtung, die die Möglichkeit gibt, das Werkzeug 8 bzw. den Plasmabrenner 9 um insgesamt fünf Achsen zu bewegen. Dabei wird über eine neuartige Baugruppe 16 der Plasmabrenner 9 sowohl um die zusätzliche Drehachse 14 sowie die zusätzliche Drehachse 15 gedreht bzw. geschwenkt, sodass damit auch sicher Fasen und räumliche Konturen geschnitten werden können. Die Baugruppe 16 ist kompakt und mit geringem Gewicht ausgestattet, sodass sie ohne großen Aufwand an bestehende Arbeitstische 5 mit Brücken 10 angeschlossen werden kann.

## Beschreibung

### Vorrichtung zum Bearbeiten von Werkstücken

Die Erfindung betrifft eine Vorrichtung zum Bearbeiten von Werkstücken insbesondere zum Plasmaschneiden mit einem Arbeitstisch, dem in mehrere Richtungen verfahrbaren Werkzeughalter und dem eigentlichen Werkzeug, wobei der Werkzeughalter mit der Brücke eines Arbeitstisches verbunden ist.

Derartige Vorrichtungen werden zur Bearbeitung von Werkstücken, insbesondere auch Blechen eingesetzt, wobei das eigentliche Werkzeug so mit der Brücke eines Arbeitstisches verbunden ist, dass das Werkzeug in drei Ebenen in seiner Position verändert werden kann, um auf diese Art und Weise das Werkzeug einmal entsprechend dicht an das zu bearbeitende Werkstück heranzubringen und zum anderen um es dann so hin und her bewegen zu können, dass das Werkzeug auf das zu bearbeitende Werkstück einwirken kann, beispielsweise zum Herausschneiden von bestimmten Formteilen.

Beim Plasmaschneiden wird ein thermisch hoch aufgeheiztes elektrisch leitfähiges Gas verwendet, das aus positiven und negativen lonen, Elektronen sowie angeregten und neutralen Atomen und Molekülen besteht. Als Plasmagas können unterschiedliche Gase eingesetzt werden, wie beispielsweise Stickstoff, Sauerstoff, Wasserstoff oder auch Luft. Diese Gase ionisieren und dissoziieren durch Energie des Plasmalichtbogens. Der Plasmastrahl wird durch den Plasmabrenner bzw. das Werkzeug und die zugeordnete Düse stark beeinflusst und in die Form gebracht, die für das Bearbeiten des Werkstückes benötigt wird. Hierzu wird beispielsweise das Plasma durch die Düse, die gas- oder wassergekühlt ist, eingeschnürt. Dadurch können hohe Energiedichten erreicht werden. Die dabei entstehenden Temperaturen liegen bis zu 30.000°C, die in Verbindung mit der hohen Strömungsgeschwindigkeit des Gases sehr hohe Schneidgeschwindigkeit realisieren.

Nachteilig bei diesen bekannten Vorrichtungen zum Bearbeiten von Werkstücken ist, dass nur eine begrenzte Bearbeitung der Werkstücke möglich ist, weil das Werkzeug nur in drei Ebenen in seiner Position variiert werden kann. Will man es in weiteren Ebenen verstellen, ist der Aufwand erheblich und die Einhaltung genauer Positionen schwierig bzw. gar nicht möglich.

Der Erfindung liegt daher die Aufgabe zugrunde, eine Vorrichtung vor allem eine Plasmaschneidmaschine zu schaffen, bei der auch eine Feineinstellung des eigentlichen Plasmabrenners bzw. Werkzeuges zum Schneiden von Fasen und von räumlichen Konturen einfach und sicher auf kleinem Raum und mit kleinsten Arbeitsschritten möglich ist.

Die Aufgabe wird gemäß der Erfindung dadurch gelöst, dass der Werkzeughalter als das Werkzeug um zwei zusätzliche Drehachsen drehende/schwenkende Baugruppe ausgebildet ist, die als Baueinheit transportierbar und montierbar ausgeführt ist. Bei einer derartigen Ausbildung der Vorrichtung kann das Werkzeug nicht nur bezüglich des Abstandes zum Werkstück und bezüglich seiner Position oberhalb des Werkstückes den Gegebenheiten entsprechend positioniert werden, sondern es besteht nun auch die Möglichkeit, das Werkzeug selbst zu verschwenken und so in eine Position zu bringen und sie dort zu halten, wo Fasen geschnitten werden oder räumliche Konturen geschnitten werden müssen. Das Werkzeug wird erfindungsgemäß einmal auf die Brücke zu und von dieser weg gedreht bzw. geschwenkt und darüber hinaus rechtwinklig dazu entsprechend schräg gestellt bzw. schräg geschwenkt. Diese zusätzlichen Drehachsen sind einer Baugruppe zugeordnet, die als solche eine Baueinheit bildet, die in vorbereiteter Form transportiert und montiert wird, um dann genau die vorgegebene Arbeit zu bewerkstelligen, die für eine Optimierung des Bearbeitens von Werkstücken sehr vorteilhaft ist.

Nach einer zweckmäßigen Ausführung der Erfindung ist vorgesehen, dass das Werkzeug ein kühlbarer, den Plasmastrahl formender Plasmabrenner ist, der über die als Brennerhalter ausgebildete Baugruppe mit der Brücke des Arbeitstisches verbunden ist. Aus diesen Merkmalen erkennbar ist, dass auch für das Bearbeiten von Werkstücken wichtige Plasmaschneiden nun eine Lösung geschaffen ist, um den Plasmabrenner zusätzlich in Positionen zu bringen, wo eine besonders zweckmäßige Bearbeitung der Werkstücke notwendig ist. Es können problemlos Fasen geschnitten werden und auch räumliche Konturen, wobei diese Baugruppe bzw. diese Baueinheit als solche an der Brücke des Arbeitstisches festgelegt ist, sodass die übrigen 3D-Positionierungen nach wie vor mit den vorhandenen Teilen der Vorrichtungen vorgenommen werden können. Das Plasmaschneiden zeichnet sich nach den weiter vorne erläuterten Gegebenheiten insbesondere durch hohe Arbeitsgeschwindigkeit aus, wobei durch die Verschwenkung des Plasmabrenners um die neuen Drehachsen zusätzliche Bearbeitungsschritte am Werkstück vorgenommen werden können. Dabei zeichnet sich die erfindungsgemäße Vorrichtung vor allen Dingen dadurch aus, dass die Baugruppe sehr kompakt ausgebildet ist, weil die beiden neuen Drehachsen aufeinander eingestellt und besonders zueinander positioniert sind und werden können.

Diese optimale Positionierung erreicht man gemäß der Erfindung insbesondere dadurch, dass die Verlängerungen der zusätzlichen Drehachsen sich im Einspannpunkt des Plasmabrenners schneidend ausgeführt sind. Dadurch kann der eigentliche Schneid- oder Brennvorgang mit dem Plasmabrenner unter Einhaltung der notwendigen präzisen Abstandsregelung durchgeführt werden. Der Plasmabrenner kann nun in insgesamt fünf Achsen bewegt werden, sodass er in alle notwendigen Positionen gebracht und in allen entsprechend gehalten werden kann.

Die Veränderung der Position des Werkzeugs bzw. des Plasmabrenners erfolgt schnell und genau, weil den zusätzlichen Drehachsen Antriebseinheiten zugeordnet sind, deren Drehwinkel über Endschalter begrenzt ausgebildet ist. Somit ist eine Antriebseinheit für die vertikale Drehachse und eine für die horizontale Achse vorgesehen, wobei diese so positioniert werden können, dass damit die kompakte Ausbildung der Baugruppe erreichbar ist. Die eingesetzten Endschalter sorgen dafür, dass eine gegenseitige Beeinflussung der Antriebseinheiten nicht eintreten kann und vor allem dafür, dass das Werkzeug bzw. der Plasmabrenner auch in Wirklichkeit nur so weit verschwenkt bzw. gedreht wird, wie dies überhaupt notwendig ist. Da sich die Verlängerung der Drehachsen in einem Punkt schneiden und zwar im Einspannpunkt des Plasmabrenners bzw. des Werkzeuges, sind überlagerte Bewegungen möglich und somit eine Kreisbewegung der Düse an der Spitze des Werkzeugs bzw. des Plasmabrenners.

Bei einer zweckmäßigen Ausführung dazu sind die Endschalter als induktive Referenz- und Endschalter ausgebildet, wobei diese optimal geeignet sind, einen vertikalen Kollisionsschutz des Plasmabrenners bzw. Werkzeuges zu erbringen.

Weiter wird die "Arbeit" der Antriebseinheiten optimiert, indem der Drehwinkel der Antriebseinheiten auf +/- 50° eingestellt ist. Dieser Drehwinkel ermöglicht eine sichere Betätigung des Werkzeuges bzw. Plasmabrenners auch unter den weiter vorn geschilderten Gegebenheiten.

Eine besonders kleinbauende Baugruppe wird erreicht, wenn wie erfindungsgemäß vorgeschlagen die den Plasmabrenner um die vertikale Drehachse schwenkende Antriebseinheit mit dieser über einen Zahnriemen verbunden ist. Es kann auf jede Art von Gestänge und Übertragungsmechanik verzichtet werden, weil die Drehbewegung der Antriebseinheit über den Zahnriemen direkt auf den Plasmabrenner bzw. die zugeordnete Drehachse einwirkt. Ein Zahnriemen mit den zugeordneten Rädern nimmt wenig Platz weg und ermöglicht es, die einzelnen Baueinheiten dicht aneinander zu rücken und dennoch sicher die notwendigen Bewegungen auf den Plasmabrenner bzw. das Werkzeug zu übertragen.

Die notwendigen Kräfte können sicher übertragen werden, weil gemäß der Erfindung der Zahnriemen einen Glasfaser-Zugstrang aufweist, über eine Spannvorrichtung verfügt und nach Einstellung der notwendigen Spannung arretierbar ausgebildet ist. Damit besteht die Möglichkeit, nach Positionierung des Plasmabrenners bzw. Werkzeugs dieses auch längere Zeit genau in dieser Position zu halten, weil der Zahnriemen aufgrund seiner Ausbildung und der dazu eingesetzten Spannvorrichtung den Plasmabrenner bzw. das Werkzeug genau in dieser Position haltend ausgeführt ist. Ein spielarmer Antrieb ist auf diese Art und Weise verwirklicht.

Eine weitere Optimierung der Baugruppe also solche ist erreicht, wenn gemäß der Erfindung die Antriebseinheit der vertikalen Drehachse einen gewissen Überstand über die Antriebseinheit der horizontalen Drehachse aufweisend geformt und/oder positioniert ist. Die beiden Antriebseinheiten stehen somit nicht nur rechtwinklig zueinander, sondern es ist die Möglichkeit geschaffen, durch den beschriebenen gewissen Versatz die Antriebseinheit der vertikalen Drehachse "mittig" der Baugruppe vorzusehen, sodass sie in gewisser Weise nach beiden Seiten der horizontalen Drehachse einen Überstand aufweist. Dadurch wird gleichzeitig auch eine Gewichtskompensation erreicht, was für den Betrieb der neuen Baugruppe von wesentlichem Vorteil ist.

Eine sichere Übertragung der Drehbewegung von der Getriebewelle auf die Drehachse erfolgt zweckmäßig dadurch, dass die Getriebewelle der Antriebseinheiten mit den Drehachsen mittels Spannsätzen verbunden ist. Vorteilhaft dabei ist, dass nach der Montage die Drehbewegung für die Getriebewelle spielfrei ist.

Mehrfach ist darauf hingewiesen worden, dass die erfindungsgemäße Baugruppe sich durch kompakte Bauweise und geschickte Zuordnung der einzelnen Teile auszeichnet. Sie zeichnen sich darüber hinaus aber auch durch ein günstiges Gewicht aus, dass gemäß der Erfindung erreicht wird, weil die Baugruppe bzw. ihre Tragteile aus Aluminium gefertigt sind. Diese Alubauweise bringt Gewichtsvorteile, sichert aber dennoch eine genaue Positionierung der einzelnen Antriebseinheiten und des vorkragenden Plasmabrenners. Durch diese kompakte Leichtbauweise kann der Plasmabrenner sehr kurz eingespannt und damit der Winkelfehler deutlich verringert werden.

Eine Reduktion der Lagerstellen wird erreicht, wenn die Drehachsen mit dem Plasmabrenner und dem Anschluss an die Brücke über einen Kreuzrollendrehkranz verbunden werden. Dieser Kreuzrollendrehkranz kann auftretende Kräfte aus allen Richtungen aufnehmen, sodass wie erwähnt die Reduktion der Lagerstellen von zwei auf eine problemlos möglich ist.

Die Erfindung zeichnet sich insbesondere dadurch aus, dass eine wesentlich bessere und genauere Bearbeitung von Werkstücken dadurch möglich wird, dass zwei zusätzliche Drehachsen für das Werkzeug bzw. den Plasmabrenner vorgehalten werden. Der Plasmabrenner bzw. das Werkzeug kann somit nicht nur in der Ebene vorwärts und seitwärts verschoben und aufwärts und abwärts bewegt werden, sondern auch das eigentliche Werkzeug bzw. der Plasmabrenner wird direkt um seine Längsachse "vorwärts" und auch "seitwärts" verschwenkt, sodass nun Fasen und auch gleichzeitig räumliche Konturen optimal geschnitten werden können, ohne dass es dazu eines aufwendigen Aufbaus bedarf. Vielmehr können über die beschriebenen Antriebseinheiten und die bekannten Bewegungseinheiten die Werkzeuge bzw. hier der Plasmabrenner in die jeweils gewünschte Position gebracht werden, wo eine optimale und genaue Bearbeitung des Werkstückes möglich ist.

Weitere Einzelheiten und Vorteile des Erfindungsgegenstandes ergeben sich aus der nachfolgenden Beschreibung der zugehörigen Zeichnung, in der ein bevorzugtes Ausführungsbeispiel mit den dazu notwendigen Einzelheiten und Einzelteilen dargestellt ist. Es zeigen:
- Figur 1: eine Plasmaschneidmaschine in Vorkopfansicht,
- Figur 2: einen Plasmabrenner teilweise im Schnitt,
- Figur 3: eine Baugruppe mit gesondert verschwenkbarem Plasmabrenner in Seitenansicht,
- Figur 4: die Baugruppe nach Figur 3 im Bereich der Achse des Horizontaldrehantriebes geschnitten und ohne Werkzeug bzw. Plasmabrenner,
- Figur 5: eine Draufsicht auf die Baugruppe,
- Figur 6: eine Vorkopfansicht der Baugruppe.

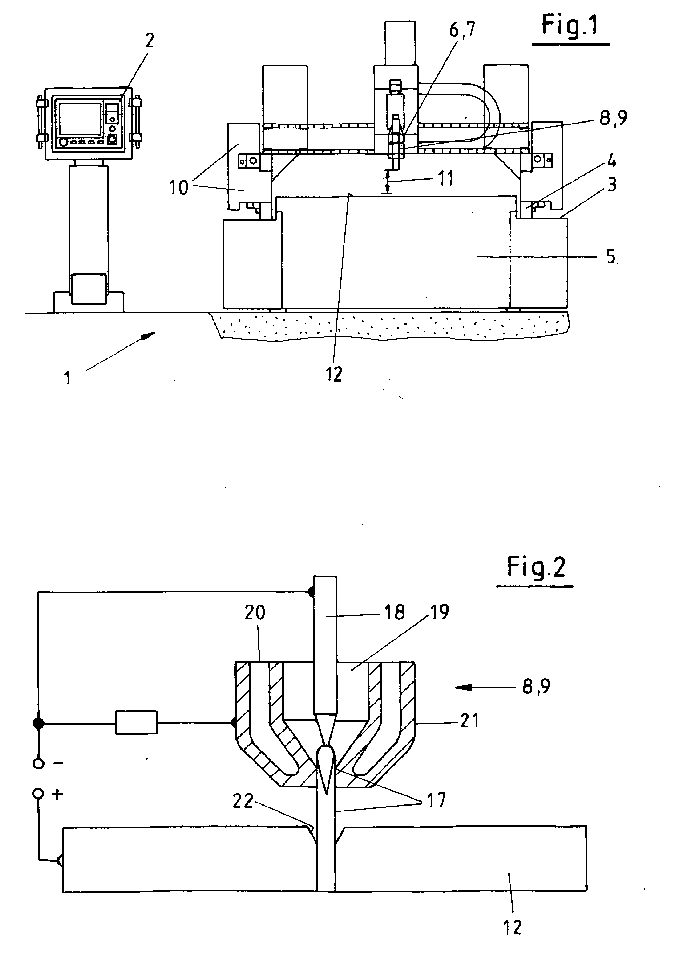

Die in Figur 1 gezeigte Plasmaschneidmaschine 1 wird vom seitlich daneben angeordneten Steuerpult 2 aus gesteuert. Auf einer Laufbahn 3 mit entsprechenden vielen Laufrollen 4 ist die Brücke 10 des Arbeitstisches 5 verfahrbar um das Werkzeug 8 bzw. den Plasmabrenner 9, der durch den Werkzeughalter 6 bzw. den Brennerhalter 7 mit der Brücke 10 verbunden ist, in die jeweilige Position zu verschwenken und zu verschieben. Mit 11 ist angedeutet, dass der Plasmabrenner 9 bzw. das Werkzeug 8 in seiner Position zum Werkzeug 12 d. h. in der Höhe verändert werden kann. 11 ist der Brennerhub oder Werkzeughub.

Der Plasmabrenner 9 kann in seinem Abstand zum Werkstück 12 verändert werden. Darüber hinaus kann er dann in der Ebene aber auch entlang der Brücke 10 verschoben werden sowie die Brücke insgesamt in Längsrichtung des Arbeitstisches 5.

Der in Figur 1 gezeigte Plasmabrenner 9 ist in Figur 2 näher erläutert. Der Plasmastrahl 17 wird durch die Elektrode 18 und das über die Plasmagaszufuhr 19 herbeiströmende Plasmagas erzeugt. Der Plasmastrahl 17 ausgehend vom Pilot-Lichtbogen sowie die Plasmagaszufuhr 19 werden über eine Wasserkühlung 20 abgekühlt, sodass eine Gefährdung der Schneiddüse 21 nicht eintreten kann. Das Werkstück ist mit 12 bezeichnet und erkennbar ist darin die Schnittfuge 22 die über den Plasmastrahl 17 erzeugt worden ist. Angedeutet ist dabei, dass eine Fase an der Schnittfuge erzeugt werden soll.

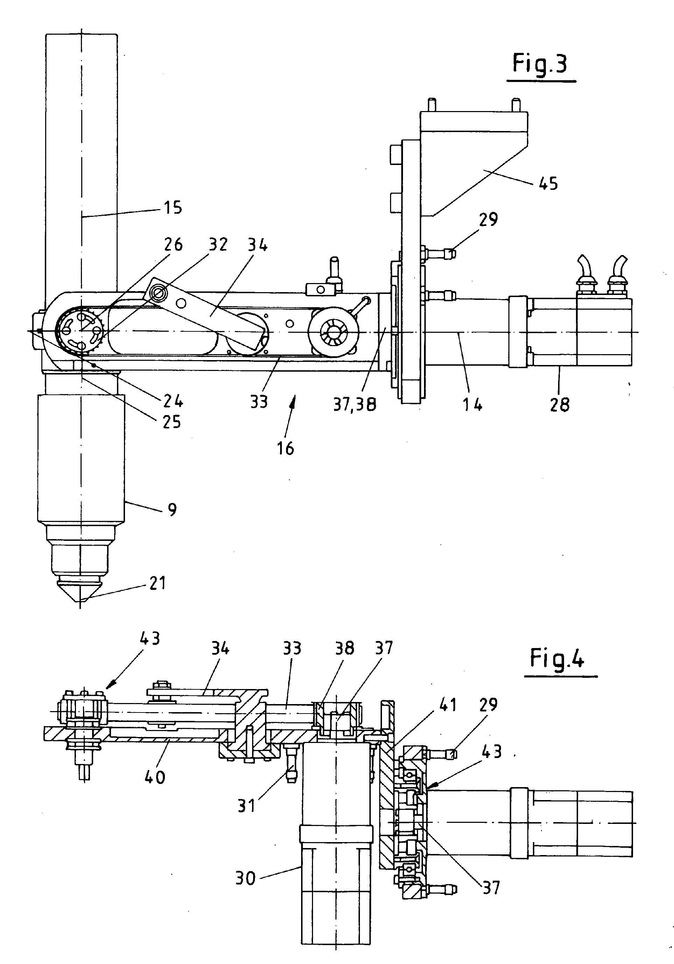

Der in Figur 1 gezeigte Plasmabrenner 9 ist gemäß Figur 3 als Baugruppe 16 ausgebildet, um diesen eigentlichen Plasmabrenner 9 in zusätzlichen Ebenen verschwenken zu können. Hierzu sind zwei zusätzliche Drehachsen 14, 15 vorgesehen, die sich bzw. deren Verlängerungen 24, 25 sich im Anspannpunkt 26 schneiden. Auch dies ist Figur 3 zu entnehmen. Diese beiden Drehachsen 14, 15 ermöglichen es, den stabförmig ausgebildeten Plasmabrenner 9 um diesen Einspannpunkt 26 zu verschwenken, sodass die Schneiddüse 21 sich entweder auf den Anschluss 45 an der Brücke 10 zu bewegt oder sich von dieser weg bewegt. Hierzu dient die Antriebseinheit 30, die in ihrer genauen Position vor allem in Figur 4 erkennbar ist. Dieser Antriebseinheit 30 sind Endschalter 31 zugeordnet, um eine zu weite Bewegung des Plasmabrenners 9 bzw. Werkstücks 8 zu vermeiden. Die Antriebseinheit 30 ist mit einem Zahnriemenantrieb ausgerüstet, wobei dieser Zahnriemen 33 über eine Spannvorrichtung 34 in eine entsprechende Spannsituation gebracht bzw. in dieser gehalten wird. Die Anordnung und Ausbildung der Spannvorrichtung 34 ist in Figur 3 und Figur 4 erkennbar. Der Zahnriemen 33 sorgt für die Übertragung der Drehkräfte der Antriebseinheit 30 auf kompakte und zweckmäßige Weise, wobei hierzu im Bereich des Plasmabrenners 9 ein entsprechendes Zahnrad 32 angeordnet ist. Die Drehachse 15 wie auch die Drehachse 14 sind über einen Kreuzrollendrehkranz 43 mit dem Plasmabrenner 9 bzw. dem Anschluss 45 verbunden. Der Zahnriemen 33 als solcher ist mit einem Glasfaserzugstrang versehen, um auf diese Art und Weise die Wirkung der Spannvorrichtung 34 zu sichern und zu optimieren.

Die horizontale Drehachse 14 wird über die Antriebseinheit 28 mit Endschalter 29 bedient. Sowohl die Endschalter 29 wie auch 31 geben einen Drehwinkel von +/- 50° vor.

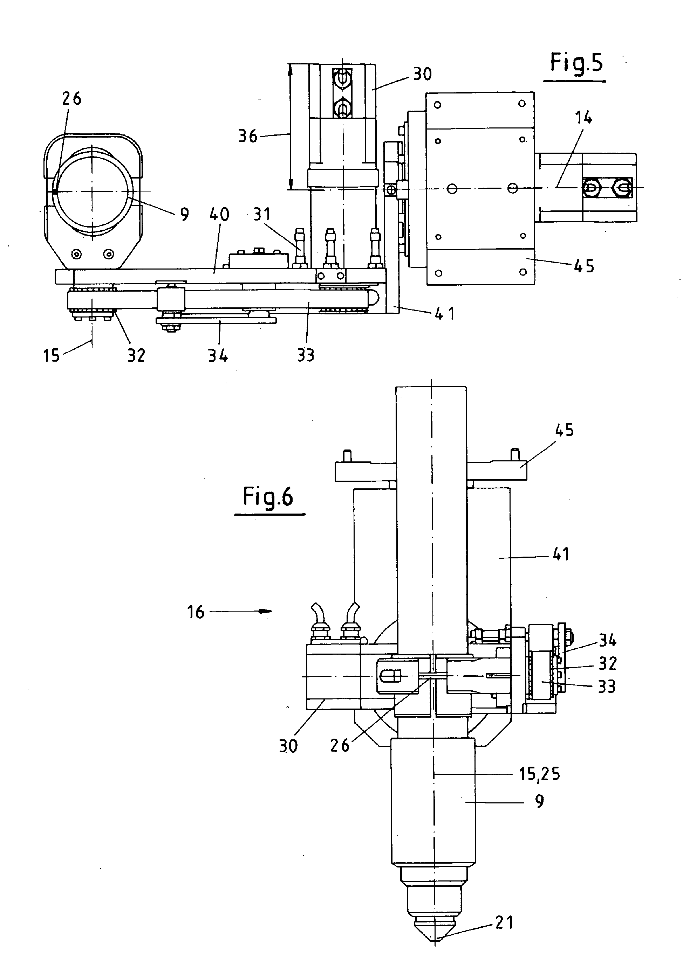

Figur 4, insbesondere aber Figur 5 lässt erkennen, dass die Antriebseinheit 30 durch einen teilweisen "Überstand" des Motors der Antriebseinheit 30 über die Drehachse 14 hinaus aufweist, sodass vor allem eine Gewichtskompensation möglich ist. Der Überstand ist mit 36 bezeichnet. Bei Figur 5 lässt sich auch die Ausbildung des Zahnriemens 33 erkennen, wobei das dem Plasmabrenner 9 zugeordnete Zahnrad 32 dem entspricht, das auf das Ende der Getriebewelle 37 der Antriebseinheit 30 aufgebracht ist. Sowohl die Getriebewelle 37 bei der Antriebseinheit 30 wie auch bei der Antriebseinheit 28 sind über einen Spannsatz 38 mit den Drehachsen 14, 15 verbunden, sodass eine genaue und sichere Übertragung der Drehbewegung gesichert ist.

Weiter vorn ist darauf hingewiesen worden, dass die Baugruppe sehr kompakt ausgebildet ist und hierzu unter anderem die Positionierung der Antriebseinheit 30 mit dem Überstand 36 beiträgt. Diese Antriebseinheit 30 wird durch das Tragteil 40 aus Aluminium gehalten, das mit dem Tragteil 41 verbunden ist und zwar winkelförmig, sodass hier die besagte Kompaktierung der Baugruppe verwirklicht ist, da die Antriebseinheit 28 rechtwinklig an diesem Tragteil 41 festgelegt ist, sodass sie dafür sorgen kann, dass die Bauteile 30 und 7 sowie 9 um die zusätzliche horizontale Drehachse 14 sich bewegen können. Da die Bewegungen der beiden Drehachsen 14, 15 sich so überlagern können, wird eine vorteilhafte Kreisbewegung der Spritze des Plasmabrenners 9 bzw. der Schneiddüse 21 erreicht.

Figur 6 zeigt die Vorkopfansicht der Baugruppe 16, wo der Schnittpunkt der beiden Drehachsen 14, 15 deutlich mit 26 gekennzeichnet ist, der mit dem Einspannpunkt ja übereinstimmt. Erkennbar ist auch das Zahnrad 32, das über den Zahnriemen 33 angetrieben wird und dann den Plasmabrenner 9 entsprechend dreht bzw. verschwenkt.

Alle genannten Merkmale, auch die den Zeichnungen allein zu entnehmenden, werden allein und in Kombination als erfindungswesentlich angesehen.

## Patentansprüche

1. Vorrichtung zum Bearbeiten von Werkstücken (12) insbesondere zum Plasmaschneiden mit einem Arbeitstisch (5), dem in mehrere Richtungen verfahrbaren Werkzeughalter (6) und dem eigentlichen Werkzeug (8), wobei der Werkzeughalter (6) mit der Brücke (10) eines Arbeitstisches (5) verbunden ist, **dadurch gekennzeichnet,**
**dass** der Werkzeughalter (6) als das Werkzeug (8) um zwei zusätzliche Drehachsen (14, 15) drehende/schwenkende Baugruppe (16) ausgebildet ist, die als Baueinheit transportierbar und montierbar ausgeführt ist.

2. Vorrichtung nach Anspruch 1,
**dadurch gekennzeichnet,**
**dass** das Werkzeug (8) ein kühlbarer, den Plasmastrahl (17) formender Plasmabrenner (9) ist, der über die als Brennerhalter (7) ausgebildete Baugruppe (16) mit der Brücke (10) des Arbeitstisches (5) verbunden ist.

3. Vorrichtung nach einem der vorhergehenden Ansprüche,
**dadurch gekennzeichnet,**
**dass** die Verlängerungen (24, 25) der zusätzlichen Drehachsen (14, 15) sich im Einspannpunkt (26) des Plasmabrenners (9) schneidend ausgeführt sind.

4. Vorrichtung nach einem der vorhergehenden Ansprüche,
**dadurch gekennzeichnet,**
**dass** den zusätzlichen Drehachsen (14, 15) Antriebseinheiten (28, 30) zugeordnet sind, deren Drehwinkel über Endschalter (29, 31) begrenzt ausgebildet ist.

5. Vorrichtung nach Anspruch 4,
**dadurch gekennzeichnet,**
**dass** die Endschalter (29, 31) als induktive Referenz- und Endschalter ausgebildet sind.

6. Vorrichtung nach einem der vorhergehenden Ansprüche,
**dadurch gekennzeichnet,**
**dass** der Drehwinkel der Antriebseinheiten (28, 30) auf +/- 50° eingestellt ist.

7. Vorrichtung nach einem der vorhergehenden Ansprüche,
**dadurch gekennzeichnet,**
**dass** die den Plasmabrenner (9) um die vertikale Drehachse (15) schwenkende Antriebseinheit (30) mit dieser über einen Zahnriemen (33) verbunden ist.

8. Vorrichtung nach Anspruch 7,
**dadurch gekennzeichnet,**
**dass** der Zahnriemen (33) einen Glasfaser-Zugstrang aufweist, über eine Spannvorrichtung (34) verfügt und nach Einstellung der notwendigen Spannung arretierbar ausgebildet ist.

9. Vorrichtung nach einem der vorhergehenden Ansprüche,
**dadurch gekennzeichnet,**
**dass** die Antriebseinheit (30) der vertikalen Drehachse (15) einen gewissen Überstand über die Antriebseinheit (28) der horizontalen Drehachse (14) aufweisend geformt und/oder positioniert ist.

10. Vorrichtung nach einem der vorhergehenden Ansprüche,
**dadurch gekennzeichnet,**
**dass** die Getriebewelle (37) der Antriebseinheiten (28, 30) mit den Drehachsen (14, 15) mittels Spannsätzen (38) verbunden ist.

11. Vorrichtung nach einem der vorhergehenden Ansprüche,
**dadurch gekennzeichnet,**
**dass** die Baugruppe (16) bzw. ihre Tragteile (40, 41) aus Aluminium gefertigt sind.

12. Vorrichtung nach einem der vorhergehenden Ansprüche,
**dadurch gekennzeichnet,**
**dass** die Drehachsen (14, 15) mit dem Plasmabrenner (9) und dem Anschluss (45) an die Brücke (10) über einen Kreuzrollendrehkranz (43) verbunden sind.
